# EUROPÄISCHE PATENTSCHRIFT

(11) **EP 3 284 635 B1**
(45) Veröffentlichungstag und Bekanntmachung des Hinweises auf die Patenterteilung: **06.03.2019**
(21) Anmeldenummer: 17180976.7
(22) Anmeldetag: 12.07.2017
(51) Int. Cl.: B60R 5/04

(54) **SCHUTZVORRICHTUNG FÜR EINEN FAHRZEUGINNENRAUM**
SAFETY COVERING DEVICE FOR A VEHICLE INTERIOR
DISPOSITIF DE PROTECTION D'HABITACLE DE VÉHICULE

(30) Priorität: 19.08.2016 DE 102016215599
(43) Veröffentlichungstag der Anmeldung: 21.02.2018
(73) Patentinhaber: BOS GmbH & Co. KG, 73760 Ostfildern (DE)
(72) Erfinder: Bilandzija, Goran, 73262 Reichenbach (DE); Röschinger, Steffen, 73547 Lorch (DE); Zaiser, Markus, 73257 Köngen (DE)
(74) Vertreter: Patentanwälte Ruff, Wilhelm, Beier, Dauster & Partner mbB

(56) Entgegenhaltungen:
- EP-A2- 1 084 907
- DE-A1-102009 023 723
- DE-B3-102009 036 606
- JP-A- 2003 127 777
- JP-A- 2007 153 128

## Beschreibung

Die Erfindung betrifft eine Schutzvorrichtung für einen Fahrzeuginnenraum mit einem flexiblen Flächengebilde, das zwischen einer Ruhestellung und einer Schutzstellung verlagerbar ist, und das an einem Stirnendbereich mit einem formstabilen Führungsprofil versehen ist, das an seinen gegenüberliegenden Stirnseiten in fahrzeugfesten Führungsspuren geführt ist, wobei jeder Stirnseite des Führungsprofils ein Koppelglied zugeordnet ist, das mittels einer kraftbegrenzt wirksamen Halteeinrichtung mit einem in der jeweiligen Führungsspur geführten Mitnehmer in Wirkverbindung ist, wobei die Mitnehmer mittels eines Antriebssystems synchron zueinander in den Führungsspuren verfahrbar sind.

Eine derartige Schutzvorrichtung ist aus der EP 1 084 907 A2 bekannt. Die bekannte Schutzvorrichtung weist als Führungsspuren auf gegenüberliegenden Seitenwandungen eines Laderaumes Führungsschienen auf, in denen jeweils ein Mitnehmer geführt ist. Die Schutzvorrichtung ist mit einem flexiblen Schutzgebilde versehen, das auf einer Wickelwelle auf- und abwickelbar gelagert ist. An einem in Auszugrichtung vorderen Stirnendbereich weist das flexible Schutzgebilde ein formstabiles Auszugprofil auf, das in kraftbegrenzt wirksamen Halteeinrichtungen, die den Mitnehmern zugeordnet sind, gehalten ist, um längs der Führungsschienen und damit längs des Laderaumes verlagert zu werden.

Aufgabe der Erfindung ist es, eine Schutzvorrichtung der eingangs genannten Art zu schaffen, die in verbesserter Weise Beschädigungen bei unsachgemäßer Handhabung vermeidet.

Diese Aufgabe wird dadurch gelöst, dass die Koppelglieder exzentrisch versetzt zu einer Mittellängsachse des Führungsprofils mit den Mitnehmern in Wirkverbindung sind, und dass die Koppelglieder von den Mitnehmern lösbar sind abhängig von externen Belastungen des Führungsprofils in Richtungskomponenten, die orthogonal zu einer Aufspannebene des Flächengebildes erstreckt sind. Beim Stand der Technik führen orthogonale Belastungen zu Beschädigungen des Führungsprofils und der Schutzvorrichtung. Dies wird bei der erfindungsgemäßen Lösung vermieden, da bei Belastungen auf das Führungsprofil in Richtungskomponenten, die orthogonal zu der Aufspannebene des Flächengebildes erstreckt sind, aufgrund der exzentrischen Versetzung der Koppelglieder Drehmomente zu einem Verdrehen der kraftbegrenzt wirksamen Halteeinrichtungen bzw. der Koppelglieder führen, die ein Lösen der Koppelglieder von den Mitnehmern auch bei Belastungen in den genannten unterschiedlichen Richtungskomponenten bewirken. Die erfindungsgemäße Lösung eignet sich in besonders vorteilhafter Weise für eine im Wesentlichen horizontale Laderaumabdeckung bei einem Personenkraftwagen, bei der unbeabsichtigte Bewegungen einer Bedienperson beim Be- oder Entladen von Transportgut entsprechende Belastungen auf das Führungsprofil ausüben können. Erfindungsgemäß erfolgt statt einer Beschädigung des Führungsprofils lediglich ein Lösen des Führungsprofils von den Mitnehmern, die in den fahrzeugfesten Führungsspuren geführt sind. Als fahrzeugfeste Führungsspuren sind insbesondere Führungsschienen vorgesehen, die in gegenüberliegenden Laderaumseitenwandungen integriert sind, und die knapp unterhalb einer Innenraumbrüstung und damit knapp unterhalb einer Fahrzeuggürtellinie verlaufen. Die erfindungsgemäße Lösung ist auch für andere Arten von Schutzvorrichtungen, insbesondere für Sonnenschutzvorrichtungen, in einem Fahrzeuginnenraum vorgesehen.

In Ausgestaltung der Erfindung ist die kraftbegrenzt wirksame Halteeinrichtung dem Mitnehmer oder dem Koppelglied zugeordnet. Das Führungsprofil weist auf jeder seiner gegenüberliegenden Stirnseiten jeweils ein Koppelglied auf. In gleicher Weise sind auch auf gegenüberliegenden Seiten des Fahrzeuginnenraumes entsprechende Führungsspuren vorgesehen, in denen jeweils ein Mitnehmer zur Mitnahme, Freigabe oder Aufnahme des jeweiligen Koppelgliedes des Führungsprofils vorgesehen ist. Entsprechend sind auch auf jeder der beiden Stirnseiten des Führungsprofils jeweils eine kraftbegrenzt wirksame Halteeinrichtung vorgesehen, die entweder am jeweiligen Koppelglied oder am jeweiligen Mitnehmer vorgesehen sind. Die kraftbegrenzte Wirksamkeit der Halteeinrichtung ist vorzugsweise mechanisch ausgeführt.

In weiterer Ausgestaltung der Erfindung sind die Koppelglieder an dem Führungsprofil fest angeordnet. Die Koppelglieder können an der jeweiligen Stirnseite des Führungsprofils einstückig angeformt oder an der jeweiligen Stirnseite lösbar oder unlösbar befestigt sein.

In weiterer Ausgestaltung der Erfindung weist jedes Koppelglied eine Außenkontur mit einer schmalen und einer in Umfangsrichtung versetzten breiten Angriffsfläche auf, wobei die Angriffsflächen je nach Drehstellung des Koppelgliedes alternativ der kraftbegrenzt wirksamen Halteeinrichtung zugeordnet sind. Dadurch kann die kraftbegrenzt wirksame Halteeinrichtung abhängig von der Drehstellung des Koppelgliedes das Koppelglied halten oder freigeben.

In weiterer Ausgestaltung der Erfindung ist die kraftbegrenzt wirksame Halteeinrichtung um eine Drehachse drehbar an dem Koppelglied oder an dem Mitnehmer angeordnet, die parallel zu der Mittellängsachse des Führungsprofils ausgerichtet ist. Durch die parallele, aber exzentrische Ausrichtung der Drehachse relativ zu der Mittellängsachse des Führungsprofils führen entsprechende Belastungen auf das Führungsprofil mit Richtungskomponenten orthogonal zur Aufspannebene des flexiblen Flächengebildes zwangsläufig zu einem Drehmoment auf die Halteeinrichtung, wodurch eine Freigabe der Halteeinrichtung in die entsprechende Richtungskomponente erzielbar ist. Unter dem Begriff der Richtungskomponente ist nicht eine resultierende Richtung, sondern vielmehr wenigstens eine Richtungskomponente zu verstehen, aus denen sich die resultierende Richtung einer entsprechenden Belastung auf das Führungsprofil zusammensetzt.

In weiterer Ausgestaltung der Erfindung weist die kraftbegrenzt wirksame Halteeinrichtung wenigstens einen kraftbegrenzt beweglichen Halteschenkel auf, der eine Außenkontur des Koppelgliedes oder des Mitnehmers flankiert. In besonders vorteilhafter Weise ist als Halteeinrichtung wenigstens eine einseitig eingespannte Blattfeder vorgesehen, die derart gebogen sein kann, dass sie einen Teil einer Außenkontur des Koppelgliedes oder des Mitnehmers formschlüssig umschließt. Die elastische Nachgiebigkeit der Blattfeder führt zu der kraftbegrenzten Wirkverbindung und demzufolge zur kraftbegrenzten Freigabe der Haltereinrichtung.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch eine Ausführungsform einer erfindungsgemäßen Schutzvorrichtung für einen Laderaum innerhalb eines Fahrzeuginnenraums eines Personenkraftwagens,
- Fig. 2: in vergrößerter perspektivischer Darstellung einen Teilbereich einer Schutzvorrichtung gemäß Fig. 1 im Bereich eines Führungsprofils eines flexiblen Flächengebildes,
- Fig. 3: eine Funktionseinheit der Schutzvorrichtung gemäß den Fig. 1 und 2 zur Aufnahme einer Stirnseite des Führungsprofils gemäß Fig. 2,
- Fig. 4: die Darstellung nach Fig. 3, jedoch mit aufgenommener Stirnseite des Führungsprofils,
- Fig. 5: ein Führungsprofil mit seitlich angeordneten Koppelgliedern gemäß einer weiteren Ausführungsform einer erfindungsgemäßen Schutzvorrichtung,
- Fig. 6: in einer Seitenansicht das Führungsprofil nach Fig. 5 mit aufgenommenem, laderaumseitigem Mitnehmer,
- Fig. 7: die Darstellung nach Fig. 6 in einer Lösestellung,
- Fig. 8: in perspektivischer Darstellung ein Führungsprofil für eine weitere Ausführungsform einer erfindungsgemäßen Schutzvorrichtung gemäß Fig. 1,
- Fig. 9: in vergrößerter Darstellung einen Ausschnitt des Führungsprofils im Bereich einer Kopplung mit einem laderaumseitigen Mitnehmer,
- Fig. 10: eine Seitenansicht der Darstellung gemäß Fig. 9 und
- Fig. 11: einen Querschnitt durch die Funktionseinheit gemäß den Fig. 9 und 10.

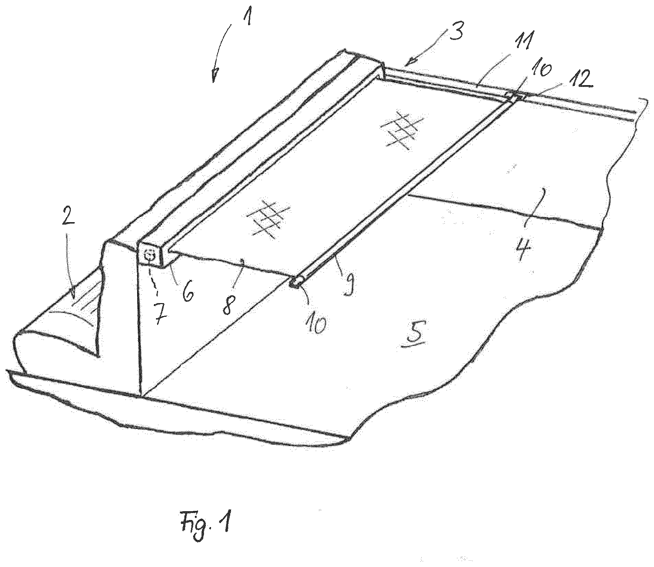

Ein Kraftfahrzeug in Form eines Personenkraftwagens weist gemäß Fig. 1 einen Fahrzeuginnenraum 1 auf, der mit einem heckseitigen Laderaum versehen ist. Der heckseitige Laderaum weist einen Laderaumboden 5 auf, der zu gegenüberliegenden Längsseiten hin durch jeweils eine Laderaumseitenwandung 4 begrenzt ist. In normaler Fahrtrichtung gesehen nach vorne ist der Laderaum durch eine Rückenlehnenanordnung einer Fondsitzbank 2 begrenzt. Dem Laderaum ist eine Schutzvorrichtung 3 zugeordnet, die nachfolgend anhand der Fig. 1 bis 11 näher beschrieben wird.

Die Schutzvorrichtung 3 weist ein formstabiles Kassettengehäuse 6 auf, das hinter der Rückenlehnenanordnung der Fondsitzbank 2 fahrzeugfest angeordnet ist und sich in Fahrzeugquerrichtung über die Breite des Laderaumes erstreckt. In dem Kassettengehäuse 6 ist eine Wickelwelle 7 drehbar gelagert, auf der ein flexibles Flächengebilde 8 in Form einer Abdeckbahn auf- und abwickelbar gehalten ist. Das flexible Flächengebilde 8 wird durch einen Längsschlitz in dem Kassettengehäuse 6 zu einem Fahrzeugheck hin nach hinten ausgezogen und durch diesen Längsschlitz auch wieder eingezogen. Die Wickelwelle 7 ist durch eine Rückholfeder in Aufwickelrichtung permanent drehmomentbeaufschlagt. Das flexible Flächengebilde 8 weist an seinem in Auszugrichtung vorderen Stirnendbereich ein formstabiles Führungsprofil 9 auf, das sich über eine gesamte Breite des flexiblen Flächengebildes 8 erstreckt und mit seinen gegenüberliegenden Stirnendbereichen 10 in laderaumfesten Führungsspuren 11 in Form von Führungsschienen parallelverlagerbar geführt ist. Die Führungsspuren 11 erstrecken sich etwa auf Höhe des Längsschlitzes des Kassettengehäuses 6 entlang der jeweiligen Laderaumseitenwandung 4 in Fahrzeuglängsrichtung nach hinten, wobei jede der beiden Führungsspuren 11 in den gegenüberliegenden Laderaumseitenwandungen 4 zumindest weitgehend parallel zu dem Laderaumboden 5 geführt ist. Die beiden Führungsspuren 11 sind in den Laderaumseitenwandungen 4 integriert und fest mit Tragstrukturteilen der Fahrzeugkarosserie verbunden. Die beiden Führungsspuren 11 erstrecken sich über die Länge des Laderaumes.

In jeder Führungsspur 11 ist jeweils ein Mitnehmer 12 geführt, der über ein nicht dargestelltes Antriebssystem entlang der jeweiligen Führungsspur 11 in Fahrzeuglängsrichtung nach vorne sowie in Fahrzeuglängsrichtung nach hinten verfahrbar ist. Beide Mitnehmer 12 sind mittels des Antriebssystems synchron zueinander in den gegenüberliegenden Führungsspuren 11 verfahrbar. Das Antriebssystem weist einen Elektromotor sowie flexible Antriebsübertragungsmittel in Form von Gewindesteigungskabeln oder in Form flexibler Zahnstangen auf, die mittels eines geeigneten Getriebes über den Elektromotor synchron und gegenläufig zueinander angetrieben werden. Die Antriebsübertragungsmittel sind mit dem jeweiligen Mitnehmer 12 verbunden, so dass eine Verlagerung der Antriebsübertragungsmittel zwangsläufig die gewünschte Verlagerung der Mitnehmer 12 in den Führungsspuren 11 bewirkt. Die grundsätzliche Verfahrfunktion sowie die Aufnahme- und Mitnahme- wie auch Freigabefunktion der Mitnehmer in Fahrzeuglängsrichtung entsprechen bei allen Ausführungsformen gemäß den Fig. 1 bis 11 den in der EP 1 084 907 A2 beschriebenen Funktionen.

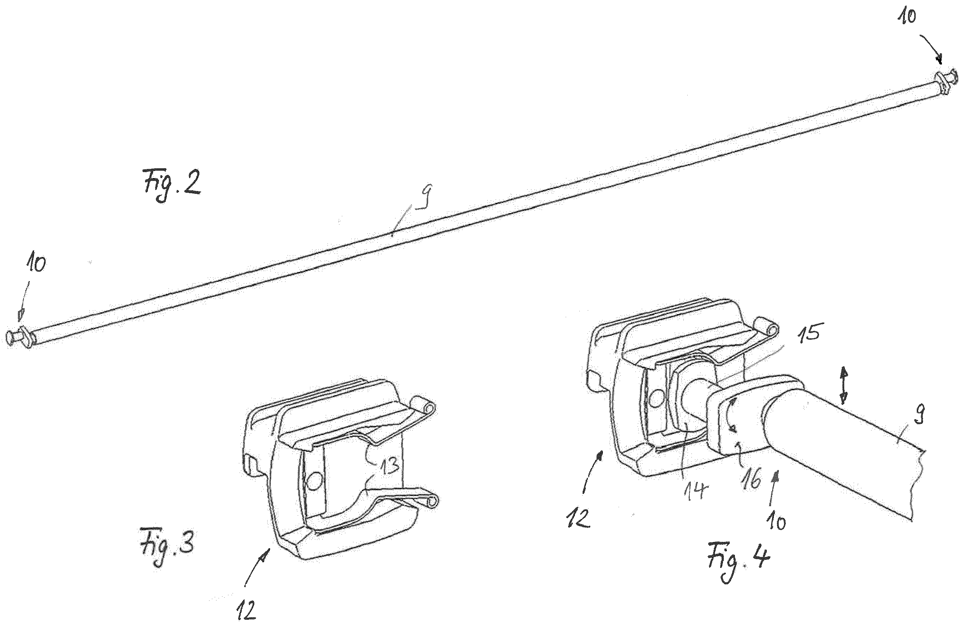

Die Mitnehmer 12 nehmen die gegenüberliegenden Stirnendbereiche 10 mittels jeweils einer kraftbegrenzt wirksamen Halteeinrichtung mit. Bei der Ausführungsform gemäß den Fig. 2 bis 4 ist die kraftbegrenzt wirksame Halteeinrichtung an dem jeweiligen Mitnehmer 12 angeordnet. Die kraftbegrenzt wirksame Halteeinrichtung weist zwei Blattfederschenkel 13 auf, die einseitig am Mitnehmer 12 fest eingespannt sind und in Richtung zum Kassettengehäuse 6 hin, d. h. zur Wickelwelle 7, offen sind, um ein kraftbegrenztes Aufnehmen oder Freigeben des jeweiligen Stirnendbereichs 10 des Führungsprofils 9 zu ermöglichen. An jedem Stirnendbereich 10 des Führungsprofils 9 ist ein Koppelglied 14 bis 16 vorgesehen, das einen Pilzkopf 14 mit einer rechteckartigen Außenkontur, einen parallel zu einer Mittellängsachse des Führungsprofils 9 erstreckten Trägerzapfen 15 sowie eine Exzenterplatte 16 aufweist, von der der Trägerzapfen 15 abragt. Die Exzenterplatte 16 ist drehfest mit dem Führungsprofil 9 verbunden. Der Trägerzapfen 15 ist fest an der Exzenterplatte 16 angeordnet und der Pilzkopf 14 ist stirnseitig an einem von der Exzenterplatte 16 wegragenden, freien Endbereich des Trägerzapfens 15 befestigt. Beim dargestellten Ausführungsbeispiel sind der Pilzkopf 14, der Trägerzapfen 15 und die Exzenterplatte 16 einstückig zueinander gestaltet. Die Exzenterplatte 16 ist stirnseitig an dem Führungsprofil 9 befestigt.

Der Pilzkopf 14 weist, wie anhand der Fig. 4 erkennbar ist, eine Außenkontur auf, die mit zwei breiteren Randschenkeln sowie etwa rechtwinklig hierzu mit zwei schmaleren Randschenkeln versehen ist. Die beiden kürzeren Randschenkel bilden eine breite Angriffsfläche, wenn der Pilzkopf 14 gemäß Fig. 4 hochkant ausgerichtet ist. Die beiden längeren Randschenkel bilden eine schmale Angriffsfläche des Pilzkopfes 14, wenn der Pilzkopf 14 um 90° verdreht ist. Die schmale Angriffsfläche ist derart gestaltet, dass der Pilzkopf 14 in dieser schmaleren Ausrichtung, d. h. in der horizontalen Ausrichtung seiner breiteren Angriffsfläche, zwischen den gegenüberliegenden Blattfederschenkeln 13 der kraftbegrenzt wirksamen Halteeinrichtung frei herausgleiten kann, ohne dass die Blattfederschenkel 13 einen formschlüssigen Rückhalt bewirken. In der Hochkantausrichtung, in der die breite Angriffsfläche des Pilzkopfes 14 gemäß Fig. 4 wirksam ist, bilden die Blattfederschenkel 13 einen kraftbegrenzten, formschlüssigen Rückhalt. Die Kraftbegrenzung erfolgt durch die elastische Biegekraft der Blattfederschenkel 13.

Im normalen Betrieb der Schutzvorrichtung 3 ist das Führungsprofil 9 gemäß Fig. 4 ausgerichtet, so dass die Exzenterplatte 16 relativ zu dem nach hinten erstreckten Flächengebilde 8 nach vorne erstreckt ist und der Trägerzapfen 15 jedes Koppelgliedes in Abstand parallel vor der Mittellängsachse des Führungsprofils 9 positioniert ist. In dieser Ausrichtung ist der Pilzkopf 14 des Koppelgliedes hochkant ausgerichtet und zwischen den Blattfederschenkeln 13 der kraftbegrenzt wirksamen Halteeinrichtung des jeweiligen Mitnehmers 12 eingerastet. Sobald nun durch eine Bedienperson beabsichtigt oder unbeabsichtigt auf das Führungsprofil 9 eine Belastung mit einer Richtungskomponente nach oben oder nach unten erfolgt (siehe Pfeildarstellung in Fig. 4), wird aufgrund der exzentrischen Anordnung des Trägerzapfens 15 zwangsläufig ein Drehmoment auf die Exzenterplatte 16, auf den Trägerzapfen 15 und auf den Pilzkopf 14 und damit auf das Koppelglied insgesamt ausgeübt (siehe Pfeildarstellung in Fig. 4), wodurch der Pilzkopf 14 sich innerhalb der kraftbegrenzt wirksamen Halteeinrichtung des jeweiligen Mitnehmers 12 um 90° verdreht. Dadurch kommt der Pilzkopf 14 und damit das jeweilige Koppelglied vom Mitnehmer 12 frei, wodurch das permanent in Aufwickelrichtung durch die Rückholfeder der Wickelwelle beaufschlagte Flächengebilde 8 das Führungsprofil 9 zum Kassettengehäuse 6 nach hinten, d. h. in Fahrzeuglängsrichtung nach vorne, zieht. Die durch das Flächengebilde 8 wirkende Zugkraft auf das Führungsprofil 9 dreht das Führungsprofil 9 und demzufolge auch die Koppelglieder 14 bis 16 an den gegenüberliegenden Stirnendbereichen 10 des Führungsprofiles 9 zwangsläufig wieder in die Ausrichtung gemäß Fig. 4, in der der jeweilige Pilzkopf 14 hochkant aufgestellt ist und der Trägerzapfen 15 vor dem Führungsprofil 9 positioniert ist.

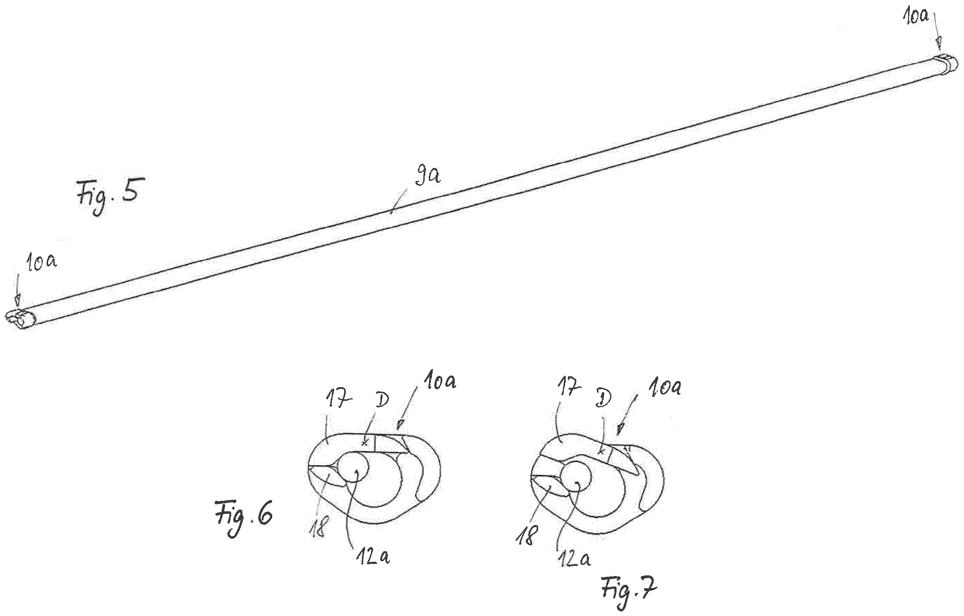

Die Ausführungsformen gemäß den Fig. 5 bis 11 sind in gleicher Weise bei der Schutzvorrichtung 3 gemäß Fig. 1 einsetzbar wie das zuvor beschriebene Führungsprofil 9. Funktionsgleiche Teile oder Abschnitte sind demzufolge mit gleichen Bezugszeichen unter Hinzufügung der Buchstaben a oder b versehen. Wesentlicher Unterschied bei den beiden Ausführungsformen gemäß den Fig. 5 bis 11 ist es, dass die kraftbegrenzt wirksamen Halteeinrichtungen, die zwischen den in den laderaumfesten Führungsspuren 11 verfahrbaren Mitnehmern 12a, 12b und den am Führungsprofil 9a befestigten Koppelgliedern der gegenüberliegenden Stirnendbereiche 10a, 10b wirksam sind, den Stirnendbereichen 10a, 10b des jeweiligen Führungsprofils 9a, 9b zugeordnet sind.

Bei der Ausführungsform nach den Fig. 5 bis 7 weist der jeweilige Mitnehmer 12a, der in der jeweiligen Führungsspur 11 verfahrbar ist, einen in Fahrzeugquerrichtung nach innen abragenden Mitnehmerzapfen auf, der mit der entsprechenden kraftbegrenzt wirksamen Halteeinrichtung am Koppelglied des jeweiligen Stirnendbereichs 10a in formschlüssigem Kontakt ist. Die kraftbegrenzt wirksame Halteeinrichtung wird durch einen kraftbegrenzt drehbeweglichen Halteschenkel 17 gebildet, der um eine Drehachse D an dem mit dem Führungsprofil 9a festen Stirnendbereich 10a begrenzt drehbar gelagert ist. Der Halteschenkel 17 bildet eine Sperrklinke, die im Bereich einer Oberseite des Stirnendbereichs 10a positioniert ist. Der Halteschenkel 17 wirkt mit einer Gegenstütze 18 zusammen, die eine Führungsfläche für den Mitnehmerzapfen des Mitnehmers 12a bildet. Anhand der Fig. 6 und 7 ist erkennbar, dass der Mitnehmerzapfen exzentrisch versetzt zu einer Mittellängsachse des Führungsprofils 9a an der Gegenstütze 18 und dem Halteschenkel 17 gehalten ist. Der Halteschenkel 17 kann in Schließrichtung ergänzend federbelastet sein. Vorzugsweise erfolgt die Federbelastung durch eine Schenkelfeder, die koaxial zur Drehachse D zwischen dem Stirnendbereich 10a des Führungsprofils 9a und dem Halteschenkel 17 wirksam ist. Die Drehachse D ist parallel, jedoch exzentrisch zur Mittellängsachse des Führungsprofils 9a positioniert.

Im normalen Betrieb nehmen die Mitnehmerzapfen der Mitnehmer 12a den jeweiligen Stirnendbereich 10a des Führungsprofils 9a gemäß Fig. 6 mit. Sobald auf das Führungsprofil 9a eine Belastung von oben ausgeübt wird, kann der Halteschenkel 17 gemäß Fig. 7 nach oben ausweichen, wodurch der Mitnehmerbolzen des Mitnehmers 12a zwischen der Gegenstütze 18 und dem Halteschenkel 17 hindurch von dem jeweiligen Stirnendbereich 10a freikommen kann. Das Flächengebilde 8 greift an dem Führungsprofil 9a in den Darstellungen gemäß Fig. 6 und 7 auf der rechten Seite der Zeichnungsebene an, so dass die auf das Flächengebilde 8 wirkende Rückholkraft das Freikommen des jeweiligen Mitnehmerzapfens der Mitnehmer 12a unterstützt.

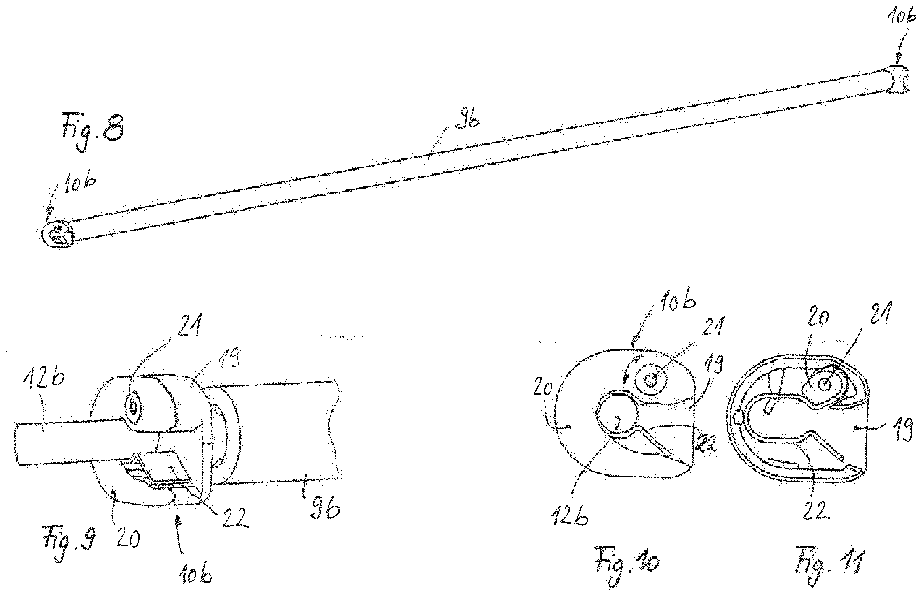

Bei der Ausführungsform nach den Fig. 8 bis 11 ist die jeweilige kraftbegrenzt wirksame Halteeinrichtung ebenfalls dem jeweiligen Koppelglied des jeweiligen Stirnendbereichs 10b des Führungsprofils 9b zugeordnet. Die beiden Mitnehmer, die in den laderaumfesten Führungsspuren 11 verfahrbar sind, sind lediglich mit einfachen Mitnehmerzapfen 12b versehen, die in Fahrzeugquerrichtung zur Mitte des Laderaumes hin nach innen abragen. Jedes Koppelglied an den gegenüberliegenden Stirnendbereichen 10b des Führungsprofils 9b weist einen mit dem Führungsprofil 9b fest verbundenen Trägerabschnitt 19 sowie einen an dem Trägerabschnitt 19 um eine Drehachse 21 drehbeweglich gelagerten Klauenabschnitt 20 auf, der mit der kraftbegrenzt wirksamen Halteeinrichtung versehen ist. Die kraftbegrenzt wirksame Halteeinrichtung wird durch eine Blattfeder 22 gebildet, die eine zu einer Seite hin offene Rastaufnahme für den Mitnehmerzapfen des Mitnehmers 12b definiert (siehe Fig. 9 bis 11). Auch der Klauenabschnitt 22 ist analog zur Öffnung der Blattfeder 22 zu einer Seite hin offen.

Die Drehachse 21 ist achsparallel versetzt zu einer Mittellängsachse des Führungsprofils 9b oberhalb der Mittellängsachse des Führungsprofils 9b an dem Halteabschnitt 19 positioniert. Die Blattfeder 22 ist gemäß Fig. 11 in dem drehbeweglichen Klauenabschnitt 20 positioniert und gemeinsam mit diesem verdrehbar. Das Flächengebilde 8 übt auf das Führungsprofil 9b aufgrund der Rückholkraft der Rückholfeder der Wickelwelle eine Zugbelastung in einer Richtung aus, die entgegengerichtet ist zu der Öffnung der Blattfeder 22 und des Klauenabschnittes 20 und damit in der Zeichnungsebene gemäß den Fig. 10 und 11 nach links.

Sobald auf das Führungsprofil 9b eine beabsichtigte oder unbeabsichtigte Belastung mit einer Richtungskomponente in Fahrzeughochrichtung nach oben oder nach unten erfolgt, verdreht sich der Klauenabschnitt 20 gemeinsam mit der Blattfeder 22 entsprechend, wodurch der Mitnehmerzapfen des jeweiligen Mitnehmers 12b aus dem Klauenabschnitt 20 freikommen kann.

## Patentansprüche

1. Schutzvorrichtung für einen Fahrzeuginnenraum mit einem flexiblen Flächengebilde (8), das zwischen einer Ruhestellung und einer Schutzstellung verlagerbar ist, und das an einem Stirnendbereich mit einem formstabilen Führungsprofil (9, 9a, 9b) versehen ist, das an seinen gegenüberliegenden Stirnseiten in fahrzeugfesten Führungsspuren (11) geführt ist, wobei jeder Stirnseite des Führungsprofils (9, 9a, 9b) ein Koppelglied zugeordnet ist, das mittels einer kraftbegrenzt wirksamen Halteeinrichtung mit einem in der jeweiligen Führungsspur (11) geführten Mitnehmer (12, 12a, 12b) in Wirkverbindung ist, wobei die Mitnehmer (12, 12a, 12b) mittels eines Antriebssystems synchron zueinander in den Führungsspuren (11) verfahrbar sind, **dadurch gekennzeichnet, dass** die Koppelglieder exzentrisch versetzt zu einer Mittellängsachse des Führungsprofils (9, 9a, 9b) mit den Mitnehmern (12, 12a, 12b) in Wirkverbindung sind, und dass die Koppelglieder von den Mitnehmern (12, 12a, 12b) lösbar sind abhängig von externen Belastungen des Führungsprofils (9, 9a, 9b) in Richtungskomponenten, die orthogonal zu einer Aufspannebene des Flächengebildes (8) erstreckt sind.

2. Schutzvorrichtung nach Anspruch 1, **dadurch gekennzeichnet, dass** die kraftbegrenzt wirksame Halteeinrichtung dem Mitnehmer (12) oder dem Koppelglied zugeordnet ist.

3. Schutzvorrichtung nach Anspruch 1 oder 2, **dadurch gekennzeichnet, dass** die Koppelglieder an dem Führungsprofil (9) fest angeordnet sind.

4. Schutzvorrichtung nach Anspruch 3, **dadurch gekennzeichnet, dass** jedes Koppelglied eine Außenkontur mit einer schmalen und einer in Umfangsrichtung versetzten breiten Angriffsfläche aufweist, wobei die Angriffsflächen je nach Drehstellung des Koppelgliedes alternativ der kraftbegrenzt wirksamen Halteeinrichtung zugeordnet sind.

5. Schutzvorrichtung nach Anspruch 1 oder 2, **dadurch gekennzeichnet, dass** die kraftbegrenzt wirksame Halteeinrichtung um eine Drehachse (D, 21) drehbar an dem Koppelglied oder an dem Mitnehmer angeordnet ist, die parallel zu der Mittellängsachse des Führungsprofils (9a, 9b) ausgerichtet ist.

6. Schutzvorrichtung nach Anspruch 5, **dadurch gekennzeichnet, dass** die kraftbegrenzt wirksame Halteeinrichtung wenigstens einen kraftbegrenzt beweglichen Halteschenkel (17) aufweist, der eine Außenkontur des Koppelgliedes oder des Mitnehmers (12a) flankiert.

7. Schutzvorrichtung nach Anspruch 5, **dadurch gekennzeichnet, dass** die kraftbegrenzt wirksame Halteeinrichtung wenigstens eine einseitig eingespannte Blattfeder (22) aufweist.

## Claims

1. Protection device for a vehicle interior compartment, comprising a flexible planar structure (8) which is displaceable between a rest position and a protective position, and which, on a face end region, is provided with a dimensionally stable guiding profile (9, 9a, 9b), which profile is guided in vehicle-fixed guiding tracks (11) on opposite face sides thereof, wherein each face side of the guiding profile (9, 9a, 9b) is associated with a coupling member which is in operative connection with an entrainer (12, 12a, 12b) guided in the respective guiding track (11) by means of a retaining device acting in a force-limited manner, wherein the entrainers (12, 12a, 12b) are shiftable in mutual synchronization within the guiding tracks (11) by means of a drive system,
**characterized in that**
the coupling members are in operative connection to the entrainers (12, 12a, 12b) eccentrically offset in relation to a central longitudinal axis of the guiding profile (9, 9a, 9b), and **in that** the coupling members are detachable from the entrainers (12, 12a, 12b) in response to external strains of the guiding profile (9, 9a, 9b) in directional components which are orthogonal in relation to a plane of deployment of the planar structure (8).

2. Protection device according to claim 1, **characterized in that** the retaining device acting in a force-limited manner is associated with the entrainer (12) or the coupling member.

3. Protection device according to claim 1 or 2, **characterized in that** the coupling members are fixedly disposed on the guiding profile (9).

4. Protection device according to claim 3, **characterized in that** each coupling member has an outer contour with a narrow engagement surface and a wide engagement surface offset in the circumferential direction, wherein the engagement surfaces are alternatively associated with the retaining device acting in a force-limited manner as a function of the rotational position of the coupling member.

5. Protection device according to claim 1 or 2, **characterized in that** the retaining device acting in a force-limited manner is disposed on the coupling member or on the entrainer to be rotatable about a rotational axis (D, 21) which is oriented in parallel to the central longitudinal axis of the guiding profile (9a, 9b).

6. Protection device according to claim 5, **characterized in that** the retaining device acting in a force-limited manner includes at least one retaining leg (17) movable in a force-limited manner, which leg flanks an outer contour of the coupling member or of the entrainer (12a).

7. Protection device according to claim 5, **characterized in that** the retaining device acting in a force-limited manner includes at least one unilaterally clamped leaf spring (22).

## Revendications

1. Dispositif de protection pour un habitacle de véhicule comprenant une structure plane flexible (8), qui est déplaçable entre une position de repos et une position de protection, et qui est pourvue à sa zone d'extrémité frontale d'un profilé de guidage (9, 9a, 9b) de forme stable, ledit profilé étant guidé sur ses faces frontales opposées dans des voies de guidage (11) fixées au véhicule, dans lequel un élément de couplage est associé à chaque face frontale du profilé de guidage (9, 9a, 9b), l'élément étant en liaison active avec un entraîneur (12, 12a, 12b) guidé dans la voie de guidage (11) respective par le biais d'un dispositif de retenue agissant de force limitée, dans lequel les entraîneurs (12, 12a, 12b) sont déplaçables dans les voies de guidage (11) par le biais d'un système de transmission en synchronisation mutuelle,
**caractérisé en ce que**
les éléments de couplage sont en liaison active avec les entraîneurs (12, 12a, 12b) décalé excentriquement par rapport à un axe longitudinal central du profilé de guidage (9, 9a, 9b), et **en ce que** les éléments de couplage sont détachables des entraîneurs (12, 12a, 12b) en fonction de contraintes externes du profilé de guidage (9, 9a, 9b) en des composantes de direction s'étendant orthogonalement à un plan de déploiement de la structure plane (8).

2. Dispositif de protection selon la revendication 1, **caractérisé en ce que** le dispositif de retenue agissant de force limitée est associé au entraîneur (12) ou au élément de couplage.

3. Dispositif de protection selon la revendication 1 ou 2, **caractérisé en ce que** les éléments de couplage sont disposés fixement sur le profilé de guidage (9).

4. Dispositif de protection selon la revendication 3, **caractérisé en ce que** chaque élément de couplage présente un contour extérieur avec une surface d'application étroite et une surface d'application large décalée dans la direction circonférentielle, dans lequel les surfaces d'application sont alternativement associées au dispositif de retenue agissant de force limitée en fonction de la position de rotation de l'élément de couplage.

5. Dispositif de protection selon la revendication 1 ou 2, **caractérisé en ce que** le dispositif de retenue agissant de force limitée est disposé sur l'élément de couplage ou sur l'entraîneur rotatif autour d'un axe de rotation (D, 21), ledit axe étant orienté en parallèle à l'axe longitudinal central du profilé de guidage (9a, 9b).

6. Dispositif de protection selon la revendication 5, **caractérisé en ce que** le dispositif de retenue agissant de force limitée présente au moins une jambe de retenue (17) mobile de force limitée, ladite jambe encadrant un contour extérieur de l'élément de couplage ou de l'entraîneur (12).

7. Dispositif de protection selon la revendication 5, **caractérisé en ce que** le dispositif de retenue agissant de force limitée présente au moins un ressort à lame (22) enserré unilatéralement.
